# EUROPEAN PATENT APPLICATION

(11) **EP 4 790 928 A1**
(43) Date of publication of application: **12.08.2026**
(21) Application number: 25156586.7
(22) Date of filing: 07.02.2025
(51) Int. Cl.: H04L 1/00, H04W 4/70

(54) **INTERNET OF THINGS RECEIVER AND TRANSMITTER**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); KUANG, Quan, 63225 Langen (DE); KANG, Yang, 469332 Singapore (SG)
(74) Representative: Grünecker Patent- und Rechtsanwälte PartG mbB

(57) **Abstract**

The present disclosure relates to an Internet of Thing, loT, receiver, comprising: a transceiver, which in operation, receives a structure indicator for a control information; a circuitry, which in operation, determines a structure of the control information based on the structure indicator.

## Description

### BACKGROUND

### 1. Technical field

The present disclosure relates to an loT device and its communication with a node, for example, a base station or an intermediate node connected to a base station.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states.

### SUMMARY

One non-limiting and exemplary embodiment facilitates an Internet of Things, loT, device communicating with a node.

In an embodiment, the techniques disclosed herein feature: An Internet of Things (IoT) receiver, comprising a transceiver, which in operation, receives a structure indicator for a control information, and a circuitry, which in operation, determines a structure of the control information based on the structure indicator.

In another embodiment, the techniques disclosed herein feature: A method comprising the following steps performed by an Internet of Things (IoT) receiver:
receiving a structure indicator for a control information; and
determining a structure of the control information based on the structure indicator.

In another embodiment, the techniques disclosed herein feature: A Internet of Things (IoT) transceiver, comprising: a circuitry, which in operation, determines a structure of a control information based on a structure indicator; and a transceiver, which in operation, transmits the structure indicator for the control information.

It should be noted that general or specific embodiments may be implemented as a system, a method, an integrated circuit, a computer program, a storage medium, or any selective combination thereof. In particular, the loT receiver and the loT transmitter may be implemented in any of a loT device and a node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a topology for an A-loT device;
- **Fig. 3**: illustrates another topology for an A-loT device;
- **Fig. 4**: illustrates communication channels in an loT communication system;
- **Fig. 5**: message comprising an unused control part;
- **Figs. 6 to 8**: messages according to a first implementation of the present disclosure;
- **Figs. 9 to 11**: messages according to a second implementation of the present disclosure;
- **Figs. 12 to 14**: messages according to a third implementation of the present disclosure;
- **Figs. 15 to 16**: messages according to a fourth implementation of the present disclosure;
- **Figs. 17 to 23**: messages according to a fifth implementation of the present disclosure;
- **Fig. 24**: illustrates a general, simplified and exemplary block diagram of an loT device and a node;
- **Fig. 25**: illustrates functional structure of the circuitries pertaining to the loT device and the node;
- **Fig. 26**: illustrates a flow diagram for the loT receiver according to an exemplary embodiment of the present disclosure;
- **Fig. 27**: illustrates a flow diagram for the loT transmitter according to an exemplary embodiment of the present disclosure;
- **Fig. 28**: is a signaling diagram illustrating an exemplary exchange between an A-loT receiver and a loT transmitter according to an exemplary embodiment of the present disclosure; and
- **Fig. 29**: shows exemplary functional split options in 5G O-RAN.

### DETAILED DESCRIPTION

### 5G NR system architecture and protocol stacks

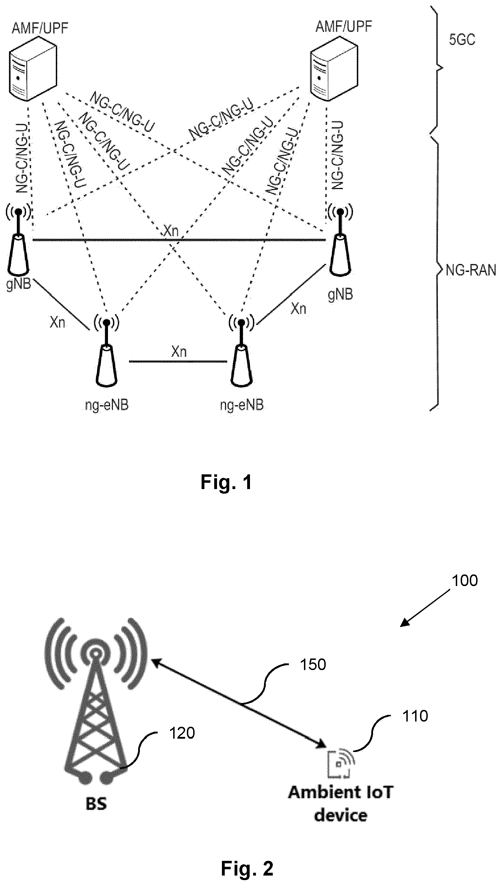

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device, in the following also referred to as loT device, may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Topologies

Particularly, two different topologies are exemplarily considered in this disclosure. In a first topology 100 as illustrated in **Fig. 2****,** an A-loT device 110 directly and bidirectionally communicates with a base station 120 over a wireless channel 150. In general, theA-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

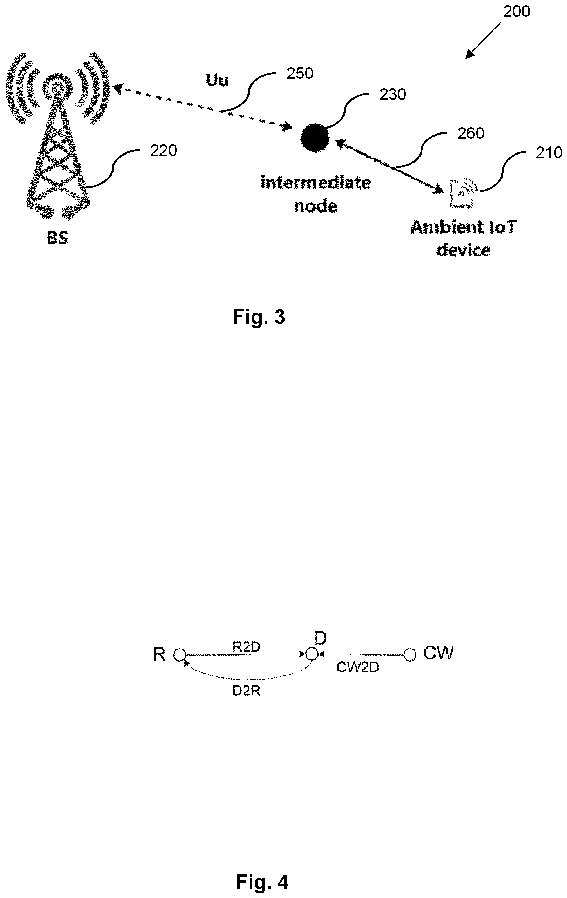

In a second topology as illustrated in **Fig. 3****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220.

In both topologies, traffics may be A-loT device terminated (DT) or A-loT device originated - device terminated triggered (DO-DTT).

The base station 220 may communicate with the intermediate node 230 via a first interface 250. In **Fig. 3****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### IoT Communication

Fig. 4 shows communication channels between A-loT reader and A-loT device. The communication channels are herein referred to as reader to device (R2D) for data transmissions from reader to device, and device to reader (D2R) for data transmissions from device to reader.

Additionally, communication by loT devices covers both active transmission as well as passive backscattering (see Fig. 4). In particular, backscattering devices do not necessarily have an active transmission component but are able to modulate information on the signal (e.g. carrier wave mentioned above) received from another node (e.g. CW node, such as a UE, a WiFi node, or access point). Active transmission allows higher range and better quality of service (QoS), compared to backscattering devices. For example, in the D1T1-B scenario, the carrier wave for R2D transmissions is provided by a separate node.

Energy-efficient communication is one key aspect for Ambient loT devices. In said respect, an On-Off-Keying (OOK) line coding scheme can be used as a modulation technique for loT communication in 3GPP 5G and future (e.g. 6G) communication systems, due to its simplicity and energy efficiency.

Depending on R2D or D2R communication, various limitations may be set. For example, multiplexing may be in R2D to be only Time Division Multiple Access (TDMA) and in D2R only TDMA and Frequency Division Multiple Access (FDMA). Further, R2D may supports only OOK-4 modulation, one solution for Cyclic Prefix (CP) handling. D2R backscattering supports only OOK and Binary Phase Shift Keying (BPSK) modulations. R2D transmission may support only the Manchester line code as discussed in TR 38.769 V. 19.0.0. D2R transmission may support the Manchester line code or no line code (one to be down-selected). Additionally, D2R may support a corresponding small frequency shift method according to the options in TR 38.769 V. 19.0.0. R2D may not support Forward Error Correction (FEC). D2R may support only convolutional code with generator polynomials as per TS 36.212 V 18.1.0. Additional other generator polynomials may be considered.

The PRDCH (Physical Reader-to-Device Channel) and PDRCH (Physical Device-to-Reader Channel) channels may be used. Both channels may support transmission without Cyclic Redundancy Check (CRC), and with CRC as per the generator polynomials in TS 38.212 V 18.5.0. Additional other generator polynomials may be considered, such as 6-bit CRC and 16-bit CRC. It is a study case which length of CRC, or no CRC should be selected.

D2R and R2D may or may not support physical layer repetition transmission. The transport block size (TBS) for the R2D and D2R communication may be limited, for example to 1000 bits.

The physical channels may be limited two only two, namely one physical channel in R2D and one in D2R. These channels may be used for carrying control information. For example, PRDCH (i.e., a channel used for R2D transmissions) and PDRCH (i.e., a channel used for D2R transmissions) channels may carry different control information.

For R2D transmissions, the possible control information may include system information, configuration of contention-based channel access, the indication of R2D data transmissions, triggering signal for D2R transmissions, and the D2R resource allocations.

The possible control information for D2R include contention-based request for channel access, request for data transmission (possibly with the indication of the data size), device type report, and power status report.

For the R2D and D2R transmissions, a common mechanisms may be used to deliver the control information. Additionally, two different approaches may be used where to arrange in a TB the control information to locate. According to a first option control information may be carried as a higher-level information. According to a second option, control information may be carried as a separate layer 1 (L1) control information.

As used herein, in line with the first option, a **higher layer message** may comprise control information and additional payload data. Further, in line with the second option, as used herein, a **lower layer message** may comprise control information without comprising payload data. In such a situation, additional resources, e.g. resources after the lower layer message, may comprise a **payload message** comprising the payload data. Notably, messages according to both options may comprise a check block, for example for the above discussed error correction or error detection.

In general, as used herein a **message** may be received. The message may comprise or consist of at least one of: the control information; a check block; payload data; lower layer message comprising the control information and a payload message comprising payload data; and a higher layer message comprising the control information and payload data.

### Further improvements

The R2D transmission could target a device or group of devices, e.g. one loT receiver such as loT device 110 or a plurality of loT receiver. For this, the transmitter, for example a reader such as base station 120, could use some sort of device identification (ID) to indicate the target device(s). If the device ID is carried as the higher-layer information by a higher layer message, all the loT devices need to receive and decode the whole message to determine the target device(s). This would increase the power consumption of those devices that are not targeted. Further, carrying the device ID by L1 control information, prior to the payload data information, by a lower layer message enables the devices to only decode the control information and determine the targeted device(s). The target device can continue receiving the data to decode the whole message. It is under study, if control information is transmitted using a higher layer message or a lower layer message.

Further, it is under study what the size of the control information is and what content the control information has. For example, target ID(s) may have a scenario dependent size. In particular, depending on the scenario, the reader may use the target device ID(s) with different size, e.g., 16 bits for a Access Stratum (AS) device ID or 48 bits for a Non-access stratum (NAS) device ID or upper layer ID. In addition, the reader may need to deliver other control information. The content of the control information could be different for different messages. For instance, the reader may include some information related to the data segmentation if the data is transmitted using several R2D transmissions. This may be the case if data such as payload data cannot fit within one R2D transport block (TB) size.

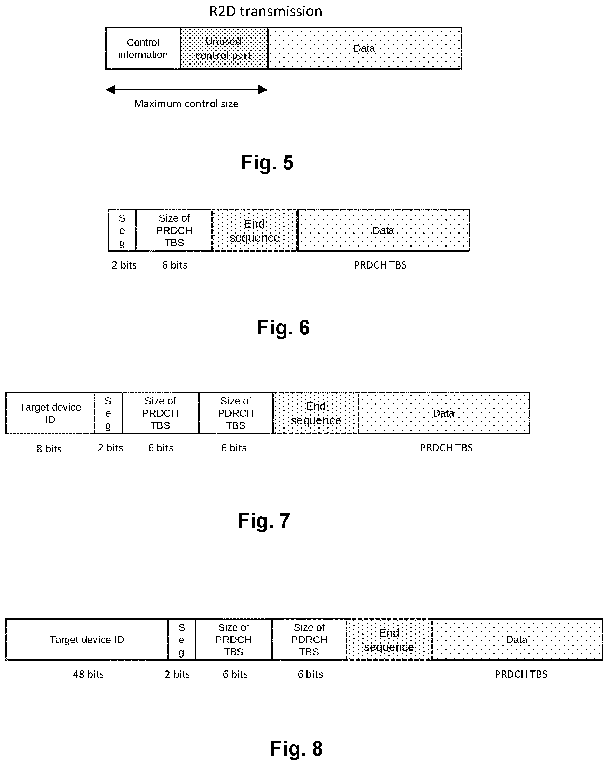

In view of the variable control size, a dedicated maximum size for control information assuming that all control information content exist for each R2D transmission is under discussion. However, this could limit the amount of data information that could be carried. Further, such a maximum size may waste the resources and increase the device energy consumption when the size of control information is low. This example scenario is shown in **Fig. 5****.** In particular, Fig. 5 shows a message comprising control information, which is comprised in the first two blocks named control information and unused control part. Further, the message comprises payload data, which is comprised in the third block titled data. As shown in Fig. 5, the loT receiver may receive control information that does not use the maximum control size and comprises unused control part.

The problem in view of the above if that the loT device may waste power by decoding a complete higher level message to identify that the device is not targeted or decoding a not used part as shown in Fig. 5 of for example a lower level message. Further, using a lower level message with a maximum sized control information may reduce the maximum throughput.

The technical problem to be solved is to reduce the power consumption for loT devices and to increase transmission throughput in the system.

The inventors have therefore identified the possibility of providing improved transmission methods to avoid one or more of the disadvantages described above. The present invention relates to various solutions, aspects, implementations, and variants for such improved transmission methods.

In general, the approach discussed in the present disclosure is to let the receiver know or indicate the size of control information and also the control information content. In view of this solution, a structure indicator is communicated and based on the structure indicator a structure of the control information is determined.

### Embodiments

The present disclosure addresses the integration of A-loT devices into communication networks, particularly, 5G and future technologies.

It is noted that the present disclosure is not limited to A-loT devices. It may be also applicable to any other kind of loT devices such as loT-receiver, loT-transmitter or to other devices, in particular in relation with communication with at least one device with possibly substantial power limitations. For example, the terms loT receiver and A-loT receiver are used interchangeably in this disclosure. Further, loT transceiver and A-loT transceiver receiver are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** or **loT device** or A**-IoT** device is a **physical entity** (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** or **"node"** or **"reader"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc. (see above background discussion).

As used herein, an **loT receiver** is a first entity, e.g. an loT-device or node, receiving within an loT system data transmitted from a second entity, e.g. a node or an loT-device. As used herein, an **loT transmitter** is a second entity, e.g. an loT-device or node, transmitting within an loT system data to be received by a first entity, e.g. a node or an loT-device. The communication channel between the first and second entity are for example the above described channels used in R2D or D2R, e.g. PRDCH and PDRCH.

An **indicator** is herein referred to as a communicated signal to convey information, such as specific operational or status information. The term **structure** as used herein defines both the position and the content of for example the control information. The position refers in particular to a size and/or an end of the structure and the content refers to the actual data or information comprised within the structure. In more detail, the **position** aspect defines where for example the control information is located, for example within a message, and may specify at least one of its starting point, length (size), and termination (end). This ensures that receiving systems can correctly interpret the boundaries of for example the control information within a message. The **content** aspect describes the actual information, for example the content comprised in the control information, below referred to as type of the control information, such as a control information specifying a device ID or indicating that a TB is segmented. The term **structure indicator** is herein referred to a communicated signal that defines at least one of a position and a content for a control information.

The **control information** refers generally to data used to manage, coordinate, and optimize the transmission of payload data across a network. Unlike payload data, which carries the actual message content, control information ensures efficient and reliable communication by facilitating functions such as identifying devices, segmentation of TBs, error detection, congestion control, routing, and synchronization. In particular, according examples of the present disclosure, the control information comprises at least one of: an indication (ID) of a loT receiver and/or loT transmitter; information indicating a segmentation of messages; information indication an upload; information indicating an upload data structure for upload data; information indicating a download; information indicating an download data structure for downloading data; system information; power status report of the loT device; and configuration information of a communication channel.

The present disclosure relates to an loT receiver, an loT transmitter, and methods of communication between the loT receiver and the -loT transmitter.

Different and exemplary implementations of the improved transmission procedure are explained in the following. For the explanation of the different implementation, some exemplary and simplifying assumptions are made.

According to one exemplary assumption, the communication is described for an loT receiver in the R2D communication channel. However, as R2D and D2R may use similar mechanisms, the loT receiver may be used in the D2R communication channel. Further, the loT transmitter can perform similar steps as the loT receiver.

According to a further exemplary description, it is referred to a lower layer message comprising the control information followed by a payload message comprising payload data. However, according to an alternative, a higher layer message may be used, wherein the higher layer message comprises the control information and payload data.

### Solution - Structure indicator

According to the solution, the loT receiver determines a structure of the control information based on a structure indicator. In other words, the receiver can determine the structure of the control information, e.g. the control information size and/or the content, according to the structure indicator, which may comprise indication part(s) of the control information. Additionally, the structure of the control information can be determined further based on previous transmissions.

It is provided an (ambient) Internet of Things, A-loT, receiver, comprising a transceiver which, in operation, receives (is configured to receive) from a loT receiver a structure indicator (e.g. an end marker, an extension marker, a check block, control filed indication, or a structure interpretation field) for a control information (e.g. a device ID, information indication segmentation), and a circuitry, which in operation, determines (is configured to determine) structure (e.g. content such as a type of the control information being a device ID and/or position such as an end of the control information) of the control information based on the structure indicator.

It is further provided an loT transmitter, comprising a circuitry, which in operation, determines a structure of a control information based on a structure indicator; and a transceiver, which in operation, transmits the structure indicator for the control information.

The structure indicator enables that the loT receiver receives information about the structure of the control information. The structure indicator may comprise a content information and a position information for the control information.

The transceiver may receive a message as discussed above. In view of the general solution, according to a 1^{st} aspect, the message may comprise or consist of at least one of: at least on structure indicator and the above discussed parts, in particular, the control information; a check block; payload data; lower layer message comprising the control information and a payload message comprising payload data; and a higher layer message comprising the control information and payload data. Notably, the structure indicator may not be necessarily comprised in the message but may have been received by a previous communicated message.

The message may have one of a plurality of set sizes. For example, a message comprising or consisting of control information may have set sizes. In other words, the position information can be from one ore a plurality of set values. This facilitates that the position information, e.g. the control information size, can be derived from a subset of position information, e.g. set size values. This further facilitates that the content information of the control information can be associated with the set size values. In particular, the content information may be determined according to the position information, e.g. the determined size. A set size is understood here to be an identifiable size as, such as by being predefined, predetermined, configured, preconfigured, preset, or the like.

The examples shown in Figs. 6 to 23 show a message that comprises a control information and data. In particular, at the beginning of a message the control information is arranged and only the last block in each of the Figs. 6 to 23 comprises payload data. In other words, Figs. 6 to 23 show a lower layer message comprising the control information and a payload message comprising payload data in the last block. Even not shown in the Figures, the message may only comprise the control information or the control information may be comprised in higher layer message. A lower layer message facilitates to reduce the power consumption for loT devices by only analysing the lower layer message and facilitates to increase transmission throughput in the system by having not waste resources.

The control information according to a 2^{nd} aspect comprises at least one of type of control information from a plurality of types of control information. The 2^{nd} aspect can be compared with the 1^{st} aspect.

The structure indicator facilitates to identify such types of control information. For example, the loT receiver may identify if the control information comprises content relating to a device ID. For example, the circuitry can determine the type of control information based on the structure indicator. The 2^{nd} aspect facilitates to increase transmission throughput by reducing the size of the structure indicator to signal the structure, in particular the content, of the control information and facilitates to reduce power consumption.

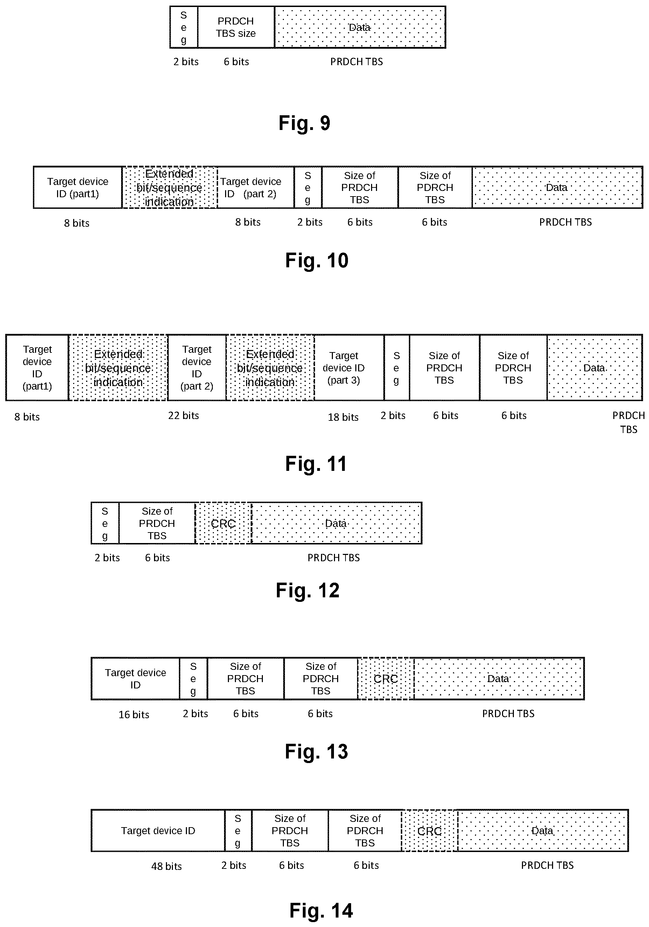

Types of control information are exemplary described with reference to Figs. 6 to 23. According to one exemplary assumption, all blocks without the last block comprise control information. An example is discussed with reference to Fig. 13. The control information comprises various blocks with different types of control information. In more detail, each type of control information is indicated by one block. In the example, the control information comprises an ID of an loT reader (block referred to as Target device ID), an information indicating a segmentation (block referred to as Seg), an information indicating an download data structure for downloading data (e.g. in Fig. 13 block referred to as size of a PRDCH TBS), an information indicating an upload data structure for uploading data (e.g. in Fig. 13 block referred to as size of a PDRCH TBS), and a check block (block referred to as CRC). The control information may comprise further types of control information with other content. Such other contents have been already discussed above and may for example comprise the structure indicator. The structure indicator facilitates to identify content of the control information, in particular identify which type of control information the blocks comprised in the control information comprise.

Further, in view of the position information of the control information is referred to the control information according to the example shown in Fig. 14. For example, the size of the block described as Target device ID can have a varying size depending on the application. For example, in Fig. 13 this block has for example a size of 16 bits and in Fig. 14 this block may have a size of 48 size. As further shown in Figs 6 to 23 the control information may not comprise all type of control information, for example as shown in Fig. 9, the control information may comprise only two blocks titled as Seg and PRDCH TBS size. Only one type of control information may also be possible. The structure indicator facilitates to identify a position such as a size, a beginning, and an end of the control information, in particular identify which size for example the block comprising the information of the Target device ID has and a size of 0 may indicate that the type of control information is not included in the message.

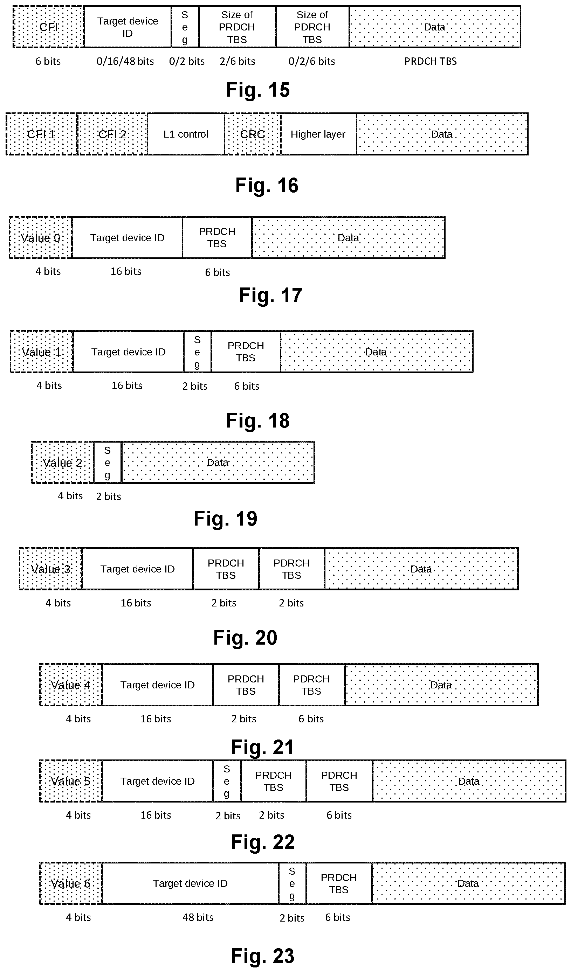

In case that the message comprises at least one structure indicator, the at least one structure indicator can be arranged in a resource received at a beginning of the message as for example shown in Figs. 15 to 23 described below, at an end of the message as for example shown in Figs. 6 to 8 described below, or between resources comprising divided parts of the control information as for example shown in Figs. 10 and 11. Notably, type of control information such as a check block shown in Figs. 12 to 14 may have additionally the function of a structure indicator as described later.

According to a 3^{rd} aspect, the control information can be divided into a plurality of parts of control information. For example, each part of control information may have a set size. In more detail, the set size is configured for the receiver. Additionally or alternatively, the structure indicator indicates a plurality of structures for the plurality of parts of control information. The 3^{rd} aspect facilitates to increase transmission throughput by reducing the size of the structure indicator to signal the structure of the control information and facilitates to reduce power consumption. The 3^{rd} aspect may be combined with any of the 1^{st} and 2^{nd} aspect.

As used herein, a part of the control information may facility to reduce the resources to signal the position information by the structure indicator. For example, sizes, e.g. predefined or configured sizes, of control information may be set.

In view of such sizes, it may be determined that for example each part of control information may comprise one type of control information according to the 2^{nd} aspect. Such a solution is in particular shown for example in Figs. 15 to 23. Further, at least part or each part of the control information may comprise a plurality of types of control information according to the 2^{nd} aspect. Such a solution is in particular shown for example in Figs. 6 to 8 and 12 to 14. Further, the division in parts facilitates that each of a plurality of parts of control information comprises a portion of one type of control information as for example shown in Figs. 10 and 11.

### 1^{st} Implementation - End marker

A 1^{st} exemplary implementation of the solution is based on the idea that an end of the control information is indicated by an end marker such as a sequence that may be predefined or set in advance.

In more detail, the structure indicator of the loT receiver according to the solution may comprise an end marker for marking an end of the control information. This solution is in particular shown in the Figs. 6 to 8, which comprise a block titled end sequence which is an example of the end marker. In other words, the end of the control information is indicated by a sequence, which can be predefined. In particular, the circuitry may determine the end of the control information based on the end marker.

As for example discussed above, the structure indicator can be part of the control information. In particular, the structure indicator may be part of the lower layer message. In other words, a sequence indication is used as an end of the control information part. Using the end marker such as a sequence or a flag facilitates that the receiver determines the end of the control information, and thus, facilitates that the receiver can determine a position information such as a size of the control information.

Additionally, as for example discussed in combination with the 1^{st} aspect, the message comprising or consisting of the control information may have one of a plurality of set sizes. This example is shown in Figs. 6 to 9.

For example, in Fig. 6 an 8-bit control information is shown. 2 bits are for segmentation related information and 6 bits are for the indication of a PRDCH size.

Fig. 7 shows an example for a 30-bit control information. Here, 16 bits may be for the target device ID, 2 bits for segmentation related information, 6 bits for the indication of PRDCH size, and 6 bits for the indication of PDRCH size.

Fig. 8 shows an example with 62-bit control information. Here, 48 bits may be for target device ID, 2 bits for segmentation related information, 6 bits for the indication of PRDCH size, and 6 bits for the indication of PDRCH size.

In the examples shown in Figs. 6 to 8, an end marker, titled as end bit/sequence, are arranged between a resource comprising control information and a resource comprising payload data.

As discussed above, resources comprising control information and the structure indicator may be received within one message, e.g. the lower layer message. Further, even not shown in Figs. 6 to 8, a check block could be added before or after the end marker.

The end marker can be part of multiple end markers. In other words, instead of using one end marker, e.g. one predefined sequence, multiple end makers, e.g. multiple predefined sequences, can be used. This facilitates to indicate further functionalities. This may be considered in view of increased complexity. In summary, the end marker indicates a further functionality. The further functionality may be for example a power status of the loT device or the like.

Additionally or alternatively to the messages comprising or consisting of the control information that can have one of a plurality of set sizes, the end marker may comprise information relating to a structure of the control information such as a content information and/or a position information. Additionally, the control information content of the control information may be identifiable for example by being predefined, predetermined, configured, preconfigured, preset, or the like.

It is noted that control information may or may not comprise control content. For example, a control content could exist in the control information but may not be used, e.g., by using 0 bits for all the fields. For instance, if the data is not segmented, the segmentation could be filled with 00.

For example, the end marker can comprise a flag or a sequence of bits. A sequence of bits, which is identifiable as an end marker for example by being predefined, predetermined, configured, preconfigured, preset, or the like, can be used at the end the control information.

This implementation facilitates in particular that the end of the control information can be detected easily by checking message for the known sequence.

### 2^{nd} Implementation - extension marker

According to the 2^{nd} implementation of the solution, which may be used additionally or alternatively to the 1^{st} implementation, an extension marker, such as a bit or a sequence indication, facilitates to indicate an extended position information, for example an extended control information size.

In more detail, the structure indicator according to an loT receiver according to the solution or the 1^{st} implementation comprises an extension marker for marking an additional control information. In particular, the 2^{nd} implementation is combined with the above discussed 3^{rd} aspect that the extension marker is arranged in a resource after at least one of the plurality of parts of control information. In other words, the position information, such as the size of a plurality of parts the control information, is derived from a subset of size values. Additionally or alternatively, as for example discussed in combination with the 1^{st} aspect, a message comprising or consisting of at least a part of the control information can have one of a plurality of set sizes. In other words, the position information, such as the size of the control information, is derived from a subset of size values. Further, the circuitry may determine an end of the control information based on the extension marker. In particular, this implementation facilitates that the extension marker comprises or consists of a flag, i.e. one bit only. In other words, this solution facilitates that one bit could be used for the extended indication, which could be decoded easily.

Figs. 9 to 11 show examples in view of this implementation. The example is similar to the Figs. 6 to 8 and a set of size values of {8, 30, 62} is assumed for the size of control information. The extension marker, referred to as first extended bit/sequence indication in Figs. 9 to 11, is used if the control information size or a size of a message comprising a control information exceeds 8 bits, while the second indication is used if the size exceeds 30 bits. Identifying the extension marker facilitates to inform the receiver that there will be additional control information or a next message comprising control information after the extension marker.

As discussed with the 1^{st} implementation, a similar content information of the control information is assumed, which may be determined based on the position information.

For example, in Fig. 9 shows as discussed with above Fig. 6 an 8-bit control information. 2 bits are for segmentation related information and 6 bits are for the indication of a PRDCH size.

Similarly to the situation in Fig. 7, Fig. 10 shows an example for a 30-bit control information. Here, 16 bits may be for target device ID, 2 bits for segmentation related information, 6 bits for the indication of PRDCH size, and 6 bits for the indication of PDRCH size. Here, different to the example in Fig. 10, the control information is divided into two parts of control information. Each of the two parts may have a set size. For example, here, the 16 bits for the target information are divided. In other words, a plurality of parts of control information comprises a portion of one type of control information, namely the target device ID also referred to as ID of an loT receiver.

Similarly to the situation in Fig. 8, Fig. 11 shows an example for a 62-bit control information. Here, 48 bits may be for target device ID, 2 bits for segmentation related information, 6 bits for the indication of PRDCH size, and 6 bits for the indication of PDRCH size. As discussed with reference to Fig. 8, the control information is divided into three parts of control information.

### 3^{rd} Implementation - structure indicator comprising a check block

According to the 3^{rd} implementation of the solution, which may be used additionally or alternatively to the 1^{st} and/or 2^{nd} implementation, the structure of the control information, for example the position such as a the size value, is determined by examining a part of a received message. The part of the message is here a check block for the control information.

A check block can comprise a Cyclic Redundancy Check (CRC), which is an error-detection technique that facilitates to ensure the integrity of transmitted data. It operates by appending a check block, usually a short, fixed-length binary sequence for example to the control information before transmission comprising a checksum. This checksum is computed for example using a generator polynomial through division operations in a finite field (modulo-2 arithmetic). At the receiving end, the receiver performs the same calculation on the incoming data and compares the computed checksum with the received check block. If the two match, the data is assumed to be error-free; otherwise, errors are detected.

Thus, the part of the message such as the check block facilitates to identify whether the structure has one of plurality of set sizes. Additionally, the case of errors may indicate the receiver to request a retransmission and/or apply other error-handling mechanisms such as Forward Error Correction (FEC) or Hybrid Automatic Repeat Request (HARQ). In loT communication systems a check block may be considered to be used at various layers of data transmission protocols, including the physical layers, to detect errors caused by noise, interference, or signal degradation. It facilitates detecting errors, as even small changes in the data significantly alter the checksum. In this implementation, it facilitates to verify if a size of the control information has one of a plurality of set sizes.

In more detail, the structure indicator according to an loT receiver according to the solution or any of the 1^{st} and 2^{nd} implementation comprises a check block and the circuitry checks the check block with the control information. This facilitates determining the structure, in particular a size value, by examining the control information with the check block.

In particular, the circuitry may determine an end of the control information if the structure of the control information has at least one of a plurality set sizes, for example if the message comprising the control information has a set size as discussed with the 1^{st} aspect and/or if the plurality of parts of control information have a plurality of set sizes according to the 3^{rd} aspect.

Figs. 12 to 14 show examples in view of this implementation. A check block, referred to as CRC in Figs. 12 to 14, is added to the control information. In the examples, the check block is added at the end of the control information. The receiver derives the structure of the control information, e.g. the size of the control information, by examining the control information with possible sizes along the attached check block.

The example shown in Figs. 12 to 14 is similar to the examples shown in Figs. 6 to 11 and a set of size values of {8, 30, 62} is assumed for the size of the control information. For example, in Fig. 12 an 8-bit control information is shown. 2 bits are for segmentation related information and 6 bits are for the indication of a PRDCH size. Fig. 13 shows an example for a 30-bit control information. Here, 16 bits may be for the target device ID, 2 bits for segmentation related information, 6 bits for the indication of PRDCH size, and 6 bits for the indication of PDRCH size. Fig. 14 shows an example with 62-bit control information. Here, 48 bits may be for target device ID, 2 bits for segmentation related information, 6 bits for the indication of PRDCH size, and 6 bits for the indication of PDRCH size.

This implementation facilitates that there is no need to reserve additional bits for the structure indicator.

### 4^{th} Implementation - structure indicator indicates a plurality of structures

According to the 4^{th} implementation of the solution, which may be used additionally or alternatively to any of the 1^{st} to 3^{rd} implementation, the control information is divided into a plurality of parts of control information and the structure indicator according to the solution or any of the 1^{st} to 3^{rd} implementation indicates a plurality of structures for the plurality of parts of control information. This implementation facilitates to increase flexibility, by a structure indicator that may enable or disable parts of the control information.

Optionally, as discussed with the 3^{rd} aspect, the control information can be divided into a plurality of parts of control information having a plurality of set sizes. This facilitates to increase transmission throughput. Optionally, as discussed with the 2^{nd} aspect, each part of control information may comprise at least one type of control information.

According to a 1^{st} variant, the structure indicator comprises a control filed indication (CFI), wherein the CFI comprises a plurality of entries, wherein the circuitry determines based on at least one entry of the CFI the structure of one of the plurality of parts of control information. For example, the structure indicator, which may be comprised in the control information as a control part, carries a field such as a bit map to the structure of the control information. In particular, the position information and content information of the control information can thus be derived.

An example with a CFI having 6 bits is shown in Table 1.

**Table1:**

| 0-1 | 2 | 3 | 4-5 |
|---|---|---|---|
| Target ID field size | Segment related field size | Size of PRDCH TBS | Size of PDRCH TBS |

Fig. 15 shows an example with a representation of PRDCH comprising a CFI with a plurality of entries followed by parts of the control information and the PRDCH data. The structure of each part of the control information is derived from the CFI comprised in the structure indicator. According to the example, the CFI is arranged in a resource received before the control information.

In particular, in the example, the plurality of CFI entries comprise a flag or a sequence of bits for indicating one of a plurality of set sizes. The set sizes have been discussed above with reference to the 1^{st} and 3^{rd} aspect and the set size may be set according to any of the 1^{st} and 3^{rd} aspect. In particular, the size of each entry could be derived from mapping tables. Tables 2 to 5 show examples of such mapping tables.

**Table2:**

| Values | Target ID field size (bits) |
|---|---|
| 00 | 0 (e.g., does not exist) |
| 01 | 16 |
| 10 | 48 |

**Table3:**

| Values | Segment related field (bits) |
|---|---|
| 0 | 0 (e.g., does not exist) |
| 1 | 2 |

**Table4:**

| Values | Size of TBS of PRDCH (bits) |
|---|---|
| 0 | 2 |
| 1 | 6 |

**Table5:**

| Values | Size of TBS of PDRCH (bits) |
|---|---|
| 00 | 0 |
| 01 | 2 |
| 10 | 6 |

Even not discussed with the figures, the CFI can carry indications for one or a plurality of messages. For example, the CFI can carry indication for the above discussed lower layer message and/or the higher layer message as have been discussed in view of the 1^{st} aspect.

According to a further example, shown in Fig. 16, the control information could be carried by a plurality of messages. In the example, a lower layer message, referred to as L1 control, and a higher layer message, for example like MAC CE type, referred to as higher layer, jointly comprises the control information. In the example, a plurality of structure indicators, here two CFls tilted as CFI1 and CFI2, could indicate the structure of the control information for the two messages separately. Even not shown, only one of the structure indicators could comprise a CFI and the other structure indicator could be one of the structure indicators as discussed in the above solution or any of the 1^{st} to 3^{rd} implementation. In other words, at least one of a plurality of structure indicators comprises the CFI.

The above discussed name CFI is intended as an exemplary name for illustration purpose.

According to a 2^{nd} variant of the 4^{th} implementation, which may be combined with the 1^{st} variant, the structure indicator comprises a structure interpretation field (SIF), wherein the circuitry determines based on a value of the SIF the plurality of structures. In other words, the structure indicator carries the SIF for the position information and the content information. The size and control information is determined accordingly based on the value of the SIF. For example, the SIF comprises a sequence of bits for indicating at least one of a plurality of set sizes and a plurality of types of control information. The set sizes have been discussed above with reference to 1^{st} and 3^{rd} aspect and the set size may be set according to any of the 1^{st} and 3^{rd} aspect. The types of control information have been discussed with reference to the 2^{nd} aspect and the types may be according to the 2^{nd} aspect. In other words, at least one of the size and type can be indicated by the value of the SIF and based on the value can be interpreted for example by a mapping table.

According to an example, the SIF may be defined as a table, containing information regarding the structure of the control information. Possible types are for example PRDCH TBS, and the TBS of scheduled PDRCH.

It may be considered that the SIF has a fixed size value, e.g., 4 or 5 bits. As discussed above, the structure indicator comprising the SIF can be arranged in a resource received before the control information. In other words, the structure indicator is placed relatively at the beginning of the control information.

The SIF facilitates that the receiver, such as a reader, is able to determine the used types of control information, in other words the existing control fields, and/or the set sizes, which can be associated to the type of control information. Thus, the receiver can determine the total size of the control information.

In addition, the SIF may indicate the TBS of the current PRDCH and scheduled PDRCH. In the particular example, a size of the above discussed check block may be different depending on the value of the SIF. For example, a shorter size of the check clock, e.g. a 6-bit check block, may be used for small payload and a larger size of the check block, e.g. a 16-bit check block, may be used for larger payload.

Even if discussed only with the 1^{st} implementation, the structure indicator may indicate a further functionality. For example, the SIF may indicate a further functionality. The further functionality may be for example a power status of the loT device or the like. In other words, the indication of other functions can be further added to the SIF.

As discussed with regard to the 1^{st} variant, the SIF can be similar to the CFI and can be carried by one or more messages such as a lower layer message, e.g. L1, and/or higher layer message, e.g. MAC CE, or combination of them. Additionally, a plurality of structure indicators at least one with the SIF may be considered.

The SIF facilitates that few bits can be used for the indication of the structure, while supporting a large combination of position information and content information.

For example, as shown in the table 6 and the examples shown in Figs. 18 to 23, a SIF with for example 4 bits is defined that contains indications for a plurality of types of control information. In the example four types of control information are used, which are referred to as TBS for PRDCH and PDRCH, the target ID field size, and segmentation related field.

**Table6:**

| Structure interpretation field (SI F), fixed size | Target ID field size | Segmentation related field | TBS of PRDCH | TBS of PDRCH | |
|---|---|---|---|---|---|
| Value 0 | 16 | 0 | 6 | 0 | PRDCH with AS-ID with data without segmentation |
| Value 1 | 16 | 2 | 6 | 0 | PRDCH with AS-ID with data with segmentation |
| Value 2 | 0 | 2 | 6 | 0 | Following segmented PRDCH data transmissions without target ID |
| Value 3 | 16 | 0 | 2 | 2 | PDRCH scheduling with AS-ID. PDRCH contain only control |
| Value 4 | 16 | 0 | 2 | 6 | PDRCH scheduling with AS-ID. PDRCH contain data without segmentation |
| Value 5 | 16 | 2 | 2 | 6 | PDRCH scheduling with AS-ID. PDRCH contain data with segmentation |
| Value 6 | 48 | 2 | 6 | 0 | PRDCH with upper layer - ID with data regardless of segmentation |
| ... | | | | | |

Figs. 18 to 23 show representations of types of control information for different values of the SI F. For example, the value 2 could be used for the following segmented PRDCH transmissions, following the first segmented data that carries the Target device ID. This facilitates to inform the receiver that there is no target ID in the following segmented data transmissions, after receiving the first data segment.

The TBS size for PRDCH and PDRCH may be determined from separate tables, for example tables 7 and 8 according to their sizes indicated by the control information. It is noted that the TBS tables could be different for PRDCH and PDRCH. In particular, the plurality of values for the SIF may be configured for the receiver and/or transceiver. In particular, the interpretation may differ depending on R2D and D2R.

**Table7:**

| Bits | PRDCH TBS(bits) |
|---|---|
| 00 | 100 |
| 01 | 300 |
| 10 | 600 |
| 11 | 900 |

**Table8:**

| Bits | PRDCH TBS(bits) |
|---|---|
| 000 000 | 10 |
| 000 001 | 20 |
| ... | |
| 111 110 | 930 |
| 111 111 | 950 |

The above discussed name SIF is intended as an exemplary name for illustration purpose.

### 1^{st} Modification- message comprises control information and a check block

According to a 1^{st} modification, which may be used with the solution and additionally to any of the 1^{st} to 4^{th} implementation, the receiver may receive a message comprising the control information and a check block. According to this modification, a check block size of the check block depends on the size of the structure indicator and/or the structure of the control information.

For example, the structure indicator may indicate the TBS of the current PRDCH and scheduled PDRCH. In the particular example, a size of the above discussed check block may be different depending on the size of the control information and/or the size of the structure indicator. For example, a shorter size of the check block, e.g. a 6-bit check block, may be used for small payload and larger size of the check block, e.g. a 16-bit check block, may be used for larger payload.

### 2^{nd} Modification- at least one structure indicator for a plurality of messages

According to a 2^{nd} modification, which may be used with the solution and additionally to any of the 1^{st} to 4^{th} implementation and the 1^{st} modification, the transceiver, which in operation, receives a first structure indicator for a first control information and a second control information. The circuitry determines the structure of a first message based on the first control information and the structure of a second message based on the first structure indicator.

For example, the first structure indicator indicates that segmentation is enabled. Thus, as for example shown in Fig. 9, the second message may not comprise a structure indicator. In this example, the first message may be received during a first transmission opportunity and the second message may be received during a second transmission opportunity different from the first transmission opportunity.

For example, according to a not shown solution and discussed with the 1^{st} variant for a lower layer message and a higher layer message, the transceiver according to the 2^{nd} modification receives additional a second message indicator for the second message and the circuitry determines the structure of a second message based on the second control information. In particular, the two messages may be received during the same transmission opportunity. In particular, the first message is a lower layer message comprising control information and the second message is a higher layer message comprising payload data and the circuitry, which in operation, determines the structure of the lower layer message based on the first control information and the structure of the higher layer message based on the second structure indicator.

### Further examples

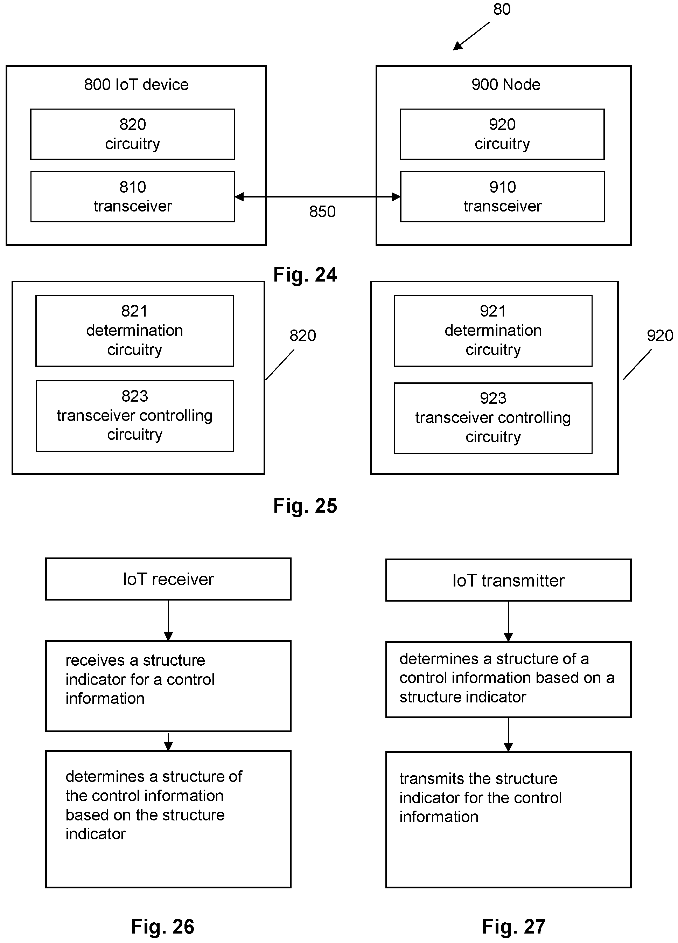

The above solution and the implementations are summarized in the flow chart for the loT receiver in **Fig. 26****.** In particular, the loT receiver may be an loT device or a node and determines a structure of the control information based on a received structure indicator.

In particular, in a first step, the loT receiver receives a structure indicator for a control information. Then, in a second step, the loT receiver determines a structure of the control information based on the structure indicator.

As similar flow chart for the loT transmitter is shown in **Fig. 27****.** In particular, the loT transmitter can be a node or an loT device transmits a determined structure indicator for the control information.

In particular, in a first step the loT transmitter determines a structure of a control information based on a structure indicator. Then, the loT transmitter the structure indicator for the control information.

### Further implementations

As mentioned above, the control information may have a varying size, for example depending on a target device ID. Therefore, a structure indicator is communicated based on which a structure of the control information can be determined. The structure of the control information relates, in particular, to the size of the control information and the content comprised in the control information.

**Fig. 24** illustrates a general, simplified and exemplary block diagram of an loT device 800, which may be an loT receiver and/or an loT transmitter, and a node (base station or intermediate node connected to a base station) 900, which may be an loT transmitter and/or an loT receiver, forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (IoT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 may comprise a transceiver 810 and a (processing) circuitry 820, and the base station 900 may comprise a transceiver 910 and a (processing) circuitry 920. The transceiver 810 or 910 in turn may comprise and/or function as a receiver and/or a transmitter. In this disclosure, in other words, the term "transceiver" is used for hardware and/or software components that allow the loT device 800, and the base station 900 to transmit and/or receive radio signals over the wireless channel 150, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 receives a message such as a paging or trigger signal. The circuitry 820 of the loT device 800 determines based on an indication of the loT device power shortage to harvest energy for the communication process. For example, the indication may indicate a power shortage of the loT device 800.

In some embodiments, the circuitry 920 of the base station 900 determines based on an indication of the loT device power shortage that the loT device harvests energy for the communication process.

The circuitries may be configured by software to perform the functions as described in any of the above embodiments. As shown in **Fig. 25** the circuitry 820 of the loT device may further comprise a functional module referred to as determination circuitry 821 for performing the determination. A transceiver controlling circuitry 823 is a functional module that controls the transceiver 810 (in Fig. 24) to receive the message. Moreover, as shown in **Fig. 25****,** the circuitry 920 of the base station or an intermediate node may further comprise a functional module referred to as determination circuitry 921 for performing any determinations. A transceiver controlling circuitry 923 is a functional module that controls the transceiver 910 (in Fig. 24) to transmit the message.

A corresponding exemplary method for an loT receiver comprises the following steps performed by an loT receiver:
receiving a structure indicator for a control information, and
determining a structure of the control information based on the structure indicator. A corresponding sequence diagram for an exemplary loT receiver behavior in line with the above-discussed loT receiver and loT receiver method is in **Fig. 26****.**

A corresponding exemplary method for an loT transmitter comprises the following steps performed by an loT transmitter:
determining a structure of a control information based on a structure indicator, and
transmitting the structure indicator for the control information.

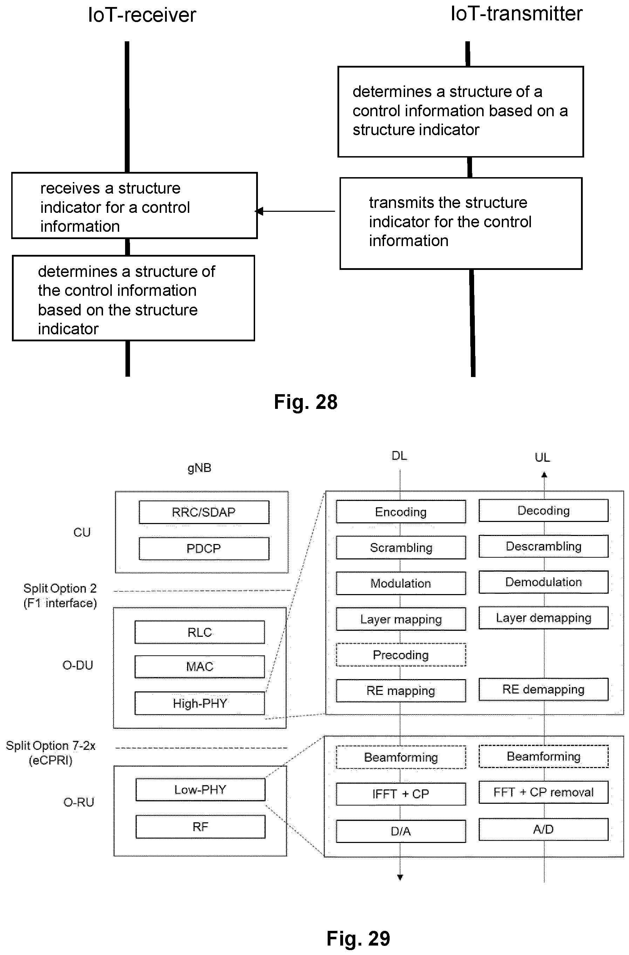

**Fig. 28** is a signalling diagram of an exemplary and simplified implementation of the improved transmission procedure, illustrating the exchange of messages between the different participating entities (here the loT receiver and the loT transmitter) and the steps performed at these entities. The loT receiver behavior and loT transmitter behavior follow the above described loT receiver and loT transmitter and the respective methods. In particular, after the loT receiver receives the message from the loT transmitter, the loT receiver determines structure of the control information based on the receiver structure indicator. In response to the determination, the loT device may determine an end and/or type of the control information.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT device may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above-mentioned embodiments and examples.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 29** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise a receiver and/or a transmitter, and/or function as a receiver and/or a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

Aspect 1 relates to an Internet of Thing, loT, receiver, comprising: a transceiver, which in operation, receives a structure indicator for a control information; a circuitry, which in operation, determines a structure of the control information based on the structure indicator.

Aspect 2 relates to the loT receiver according to aspect 1, wherein the transceiver, which in operation, receives a message, wherein the message comprises at least one of the at least one structure indicator; the control information; a check block; payload data; lower layer message comprising the control information and a payload message comprising payload data; and a higher layer message comprising the control information and payload data.

According to an option of aspect 2 the at least one structure indicator is arranged in a resource received at a beginning of the message, at an end of the message, and/or between resources comprising divided parts of the control information.

According to an option of aspect 2 the message has one of a plurality of set sizes.

Aspect 3 relates to the loT receiver according to any of aspects 1 to 2, wherein the control information comprises at least one of type of control information from a plurality of types of control information.

According to an option of aspect 3 the circuitry determines the type of control information based on the structure indicator;

According to an option of aspect 3 the types of control information comprising at least one of: an indication, ID, of a loT receiver and/or loT transmitter; information indicating a segmentation of messages; information indication an upload; information indicating an upload data structure for upload data; information indicating a download; information indicating an download data structure for downloading data; system information; power status report of the loT device; and configuration information of a communication channel.

Aspect 4 relates to the loT receiver according to any one of aspects 1 to 3, wherein the control information is divided into a plurality of parts of control information having a plurality of set sizes.

According to an option of aspect 4 the plurality of set sizes is configured for the receiver.

According to an option of aspect 4 a part of the control information comprises at least one type of control information according to aspect 3.

According to an option of aspect 4 each of a plurality of parts of control information comprises a portion of one type of control information according to aspect 3.

Aspect 5 relates to the loT receiver according to any one of aspects 1 to 4, wherein the structure indicator comprises an end marker for marking an end of the control information.

According to an option of aspect 5 the end marker comprises a flag or a sequence of bits.

According to an option of aspect 5 the end marker comprises information relating to a structure of the control information.

According to an option of aspect 5 the end marker indicates a further functionality.

According to an option of aspect 5 the end marker is arranged between a resource comprising control information and a resource comprising payload data.

According to an option of aspect 5 the circuitry determines the end of the control information based on the end marker.

Aspect 6 relates to the loT receiver according to any one of aspects 1 to 5, wherein the structure indicator comprises an extension marker for marking an additional control information.

According to an option of aspect 6 the extension marker comprises a flag.

According to an option of aspect 6 the extension marker is arranged in a resource after at least one of the plurality of parts of control information according to aspect 4.

According to an option of aspect 6 the circuitry determines an end of the control information based on the extension marker.

Aspect 7 relates to the loT receiver according to any one of aspects 1 to 6, wherein the structure indicator comprises a check block and the circuitry checks the check block with the control information.

According to an option of aspect 7 the circuitry determines an end of the control information if a message comprising the control information has at least one of a plurality of set sizes according to aspect 2.

According to an option of aspect 7 the circuitry determines an end of the control information if the structure of the control information has at least one of a set size according to aspect 4.

Aspect 8 relates to the loT receiver according to any one of aspects 1 to 7, wherein the control information is divided into a plurality of parts of control information and the structure indicator indicates a plurality of structures for the plurality of parts of control information.

According to an option of aspect 8 each part of control information comprises a type of control information according to aspect 3.

Aspect 9 relates to the loT receiver according to aspect 8, wherein the structure indicator comprises a control filed indication, CFI, wherein the CFI comprises a plurality of entries, wherein the circuitry determines based on at least one entry of the CFI the structure of one of the plurality of parts of control information.

According to an option of aspect 9 at least one entry of the plurality of CFI entries comprises at least one of a flag and a sequence of bits for indicating one of a plurality of set sizes.

According to an option of aspect 9 the CFI is arranged in a resource received before the control information.

Aspect 10 relates to the loT receiver according to any one of aspect 8 to 9, wherein the structure indicator comprises a structure interpretation field, SIF, wherein the circuitry determines based on a value of the SIF the plurality of structures.

According to an option of aspect 10 the SIF comprises a sequence of bits for indicating at least one of plurality of set sizes and types of control information.

According to an option of aspect 10 the SIF is arranged in a resource received before the control information.

According to an option of aspect 10 a plurality of values for the SIF are configured for the receiver.

Aspect 11 relates to the loT receiver according to any one of aspects 1 to 10, wherein a message comprises the control information and a check block and wherein a check block size of the check block depends on the size of the structure indicator and/or the structure of the control information.

Aspect 12 relates to the loT receiver according to any one of aspects 1 to 11, wherein the transceiver, which in operation, receives a first structure indicator for a first control information and a second control information; and the circuitry, which in operation, determines the structure of a first message based on the first control information and the structure of a second message based on the first structure indicator.

According to an option of aspect 12 the first message is received during a first transmission opportunity and the second message is received during a second transmission opportunity different from the first transmission opportunity.

According to an option of aspect 12 the transceiver receives a second message indicator for the second message and the circuitry determines the structure of a second message based on the second control information.

According to an option of aspect 12 the first message is a lower layer message comprising control information and the second message is a higher layer message comprising payload data and the circuitry, which in operation, determines the structure of the lower layer message based on the first control information and the structure of the higher layer message based on the second structure indicator.

According to an option of aspect 12 the lower layer message and the higher layer message are received during the same transmission opportunity.

Aspect 13 relates to an Internet of Thing, loT, receiver, wherein the structure indicator comprises at least one of a size indicator and a content indicator; and the circuitry determines at least one of an end of the control information based on the size indicator and a type of control information based on the content indicator.

Aspect 14 relates to a method comprising the following steps performed by an Internet of Things, loT, receiver:
receiving a structure indicator for a control information; and
determining a structure of the control information based on the structure indicator.

Aspect 15 relates to an Internet of Thing, loT, transmitter, comprising:
a circuitry, which in operation, determines a structure of a control information based on a structure indicator; and
a transceiver, which in operation, transmits the structure indicator for the control information.

## Claims

1. An Internet of Thing, loT, receiver, comprising:
a transceiver, which in operation, receives a structure indicator for a control information;
a circuitry, which in operation, determines a structure of the control information based on the structure indicator.

2. The loT receiver according to claim 1, wherein the transceiver, which in operation, receives a message, wherein the message comprises at least one of
• the at least one structure indicator;
• the control information;
• a check block;
• payload data;
• lower layer message comprising the control information and a payload message comprising payload data; and
• a higher layer message comprising the control information and payload data;
optionally wherein the at least one structure indicator is arranged in a resource received at a beginning of the message, at an end of the message, and/or between resources comprising divided parts of the control information;
optionally wherein the message has one of a plurality of set sizes.

3. The loT receiver according to any of claims 1 to 2, wherein the control information comprises at least one of type of control information from a plurality of types of control information;
optionally wherein the circuitry determines the type of control information based on the structure indicator;
optionally wherein the types of control information comprising at least one of:
• an indication, ID, of a loT receiver and/or loT transmitter;
• information indicating a segmentation of messages;
• information indication an upload;
• information indicating an upload data structure for upload data;
• information indicating a download;
• information indicating an download data structure for downloading data;
• system information;
• power status report of the loT device; and
• configuration information of a communication channel.

4. The loT receiver according to any one of claims 1 to 3, wherein the control information is divided into a plurality of parts of control information having a plurality of set sizes;
optionally wherein the plurality of set sizes is configured for the receiver;
optionally wherein a part of the control information comprises at least one type of control information according to claim 3;
optionally wherein each of a plurality of parts of control information comprises a portion of one type of control information according to claim 3.

5. The loT receiver according to any one of claims 1 to 4, wherein the structure indicator comprises an end marker for marking an end of the control information;
optionally wherein the end marker comprises a flag or a sequence of bits;
optionally wherein the end marker comprises information relating to a structure of the control information;
optionally wherein the end marker indicates a further functionality;
optionally wherein the end marker is arranged between a resource comprising control information and a resource comprising payload data;
optionally wherein the circuitry determines the end of the control information based on the end marker.

6. The loT receiver according to any one of claims 1 to 5, wherein the structure indicator comprises an extension marker for marking an additional control information;
optionally wherein the extension marker comprises a flag;
optionally wherein the extension marker is arranged in a resource after at least one of the plurality of parts of control information according to claim 4;
optionally wherein the circuitry determines an end of the control information based on the extension marker.

7. The loT receiver according to any one of claims 1 to 6, wherein the structure indicator comprises a check block and the circuitry checks the check block with the control information;
optionally wherein the circuitry determines an end of the control information if a message comprising the control information has at least one of a plurality of set sizes according to claim 2;
optionally wherein the circuitry determines an end of the control information if the structure of the control information has at least one of a set size according to claim 4.

8. The loT receiver according to any one of claims 1 to 7, wherein the control information is divided into a plurality of parts of control information and the structure indicator indicates a plurality of structures for the plurality of parts of control information;
optionally wherein each part of control information comprises a type of control information according to claim 3.

9. The loT receiver according to claim 8, wherein the structure indicator comprises a control filed indication, CFI, wherein the CFI comprises a plurality of entries, wherein the circuitry determines based on at least one entry of the CFI the structure of one of the plurality of parts of control information;
optionally wherein at least one entry of the plurality of CFI entries comprises at least one of a flag and a sequence of bits for indicating one of a plurality of set sizes;
optionally wherein the CFI is arranged in a resource received before the control information.

10. The loT receiver according to any one of claim 8 to 9, wherein the structure indicator comprises a structure interpretation field, SIF, wherein the circuitry determines based on a value of the SIF the plurality of structures;
optionally wherein the SIF comprises a sequence of bits for indicating at least one of plurality of set sizes and types of control information;
optionally wherein the SIF is arranged in a resource received before the control information;
optionally wherein a plurality of values for the SIF are configured for the receiver.

11. The loT receiver according to any one of claims 1 to 10, wherein a message comprises the control information and a check block and wherein a check block size of the check block depends on the size of the structure indicator and/or the structure of the control information.

12. The loT receiver according to any one of claims 1 to 11,
wherein the transceiver, which in operation, receives a first structure indicator for a first control information and a second control information; and
the circuitry, which in operation, determines the structure of a first message based on the first control information and the structure of a second message based on the first structure indicator;
optionally wherein the first message is received during a first transmission opportunity and the second message is received during a second transmission opportunity different from the first transmission opportunity;
optionally wherein the transceiver receives a second message indicator for the second message and the circuitry determines the structure of a second message based on the second control information;
optionally wherein the first message is a lower layer message comprising control information and the second message is a higher layer message comprising payload data and the circuitry, which in operation, determines the structure of the lower layer message based on the first control information and the structure of the higher layer message based on the second structure indicator;
optionally wherein the lower layer message and the higher layer message are received during the same transmission opportunity.

13. Internet of Thing, loT, receiver, wherein the structure indicator comprises at least one of a size indicator and a content indicator; and the circuitry determines at least one of an end of the control information based on the size indicator and a type of control information based on the content indicator.

14. A method comprising the following steps performed by an Internet of Things, loT, receiver:
receiving a structure indicator for a control information; and
determining a structure of the control information based on the structure indicator.

15. An Internet of Thing, loT, transmitter, comprising:
a circuitry, which in operation, determines a structure of a control information based on a structure indicator; and
a transceiver, which in operation, transmits the structure indicator for the control information.
